# EUROPEAN PATENT APPLICATION

(11) **EP 4 787 133 A1**
(43) Date of publication of application: **05.08.2026**
(21) Application number: 26150373.4
(22) Date of filing: 06.01.2026
(51) Int. Cl.: G06F 3/048, H04N 1/00, H04L 9/40

(54) **IMAGE FORMING APPARATUS**

(30) Priority: 30.01.2025 JP 2025013524
(71) Applicant: Brother Kogyo Kabushiki Kaisha, Nagoya-shi, Aichi 467-8561 (JP)
(72) Inventor: INOUE, Takuya, Nagoya, 467-8562 (JP); MORI, Kyohei, Nagoya, 467-8562 (JP); HAYASHI, Masahiro, Nagoya, 467-8562 (JP)
(74) Representative: J A Kemp LLP

(57) **Abstract**

An image forming apparatus includes a memory, a user interface, a network interface, and a controller. The image forming apparatus is connectable to the Internet via the network interface. The controller is configured to: perform communication via the network interface in accordance with a setting value stored in the memory; in response to receiving, via the user interface, an instruction to change the setting value stored in the memory, change the setting value in accordance with the instruction; perform communication via the network interface in accordance with the changed setting value stored in the memory; and control the user interface to display a warning regarding security degradation based on the received instruction.

## Description

### TECHNICAL FIELD

This application claims priority from Japanese Patent Application No. 2025-013524 filed on January 30, 2025. The entire content of the priority application is incorporated herein by reference. This application relates to settings of an image forming apparatus connectable to the Internet.

### BACKGROUND ART

Japanese Patent Application Publication No. 2021-36397 describes a technique of using an EWS (abbreviation of Embedded Web Server) to receive an instruction to change a setting value of an image forming apparatus.

### SUMMARY OF INVENTION

### TECHNICAL PROBLEM

However, the above document does not mention a case where the instruction to change the setting value may cause security degradation.

In view of the foregoing, an example of an object of this disclosure is to provide a technique of giving a warning when an instruction to change a setting value may cause security degradation.

### SOLUTION TO PROBLEM

According to one aspect, this disclosure provides an image forming apparatus including a memory, a user interface, a network interface, and a controller. The image forming apparatus is connectable to the Internet via the network interface. The controller is configured to: perform communication via the network interface in accordance with a setting value stored in the memory; in response to receiving, via the user interface, an instruction to change the setting value stored in the memory, change the setting value in accordance with the instruction; perform communication via the network interface in accordance with the changed setting value stored in the memory; and control the user interface to display a warning regarding security degradation based on the received instruction.

### ADVANTAGEOUS EFFECTS

According to the image forming apparatus of this disclosure, a warning is provided when the instruction to change the setting value may cause security degradation.

### BRIEF DESCRIPTION OF DRAWINGS

FIG. 1 is a block diagram of an image forming system.
FIG. 2 illustrates an example of a network protocol setting screen displayed on a Web browser.
FIGS. 3A, 3B, 3C and 3D illustrate an example of a screen when a setting value of Telnet is changed from disabled to enabled.
FIGS. 4A, 4B and 4C illustrate an example of a detailed setting screen of Syslog.
FIGS. 5A, 5B, 5C, 5D and 5E illustrate examples of a network protocol and a setting value of the warning target.
FIGS. 6A, 6B, 6C and 6D illustrate an example of a TLS setting screen.
FIGS. 7A, 7B, 7C and 7D illustrate an example of setting values selectable in a symmetric-key encryption method.
FIGS. 8A, 8B, 8C and 8D illustrate an example of setting values selectable in a public-key encryption method.
FIGS. 9A, 9B, 9C and 9D illustrate an example of setting values selectable by a hash function.
FIGS. 10A, 10B, 10C and 10D illustrate an example of a URL input screen.
FIG. 11 is a flowchart showing a procedure of a setting value change process.

### DESCRIPTION OF EMBODIMENTS

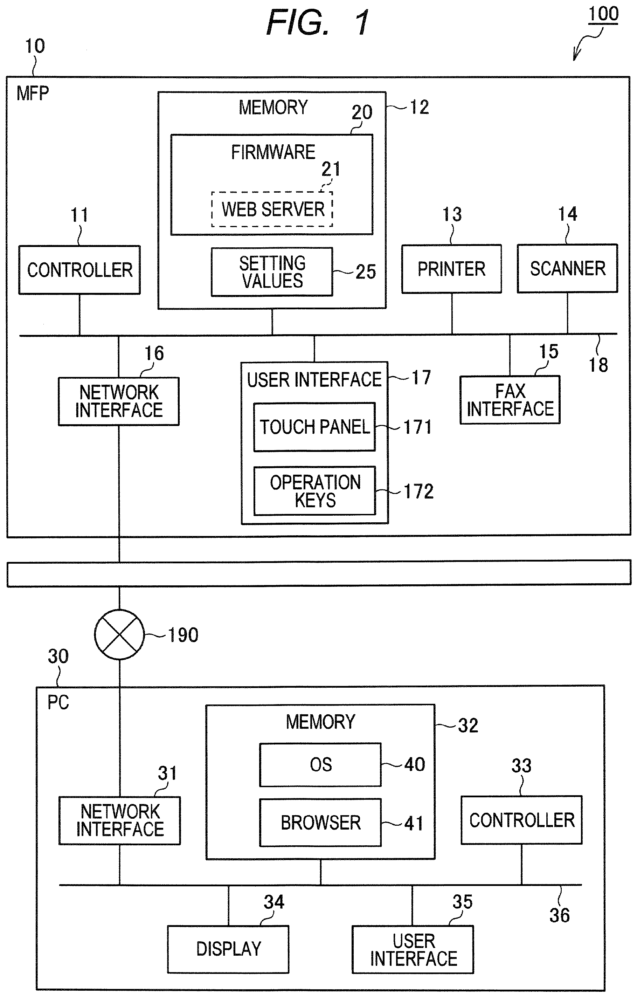

An image forming system 100 according to an embodiment will be described with reference to the drawings. The image forming system 100 shown in FIG. 1 includes an MFP 10 and a PC 30. "MFP" is an abbreviation for multifunction peripheral. The MFP 10 and the PC 30 are connected to a network 190, and communicate with each other through the network 190. The network 190 is a LAN or the Internet. In the present embodiment, the MFP 10 is an example of an image forming apparatus. The PC 30 is an example of an external apparatus.

The MFP 100 includes a controller 11, a memory 12, a printer 13, a scanner 14, a FAX interface (IF) 15, a network interface 16, a user interface 17, and a bus 18. The controller 11 is an example of a computer. "IF" is an abbreviation for interface. The network interface 16 connects the MFP 10 to the network 190 in accordance with a particular network protocol. The user interface 17 is an interface between the controller 11 and a user who directly operates the MFP 10, and includes a touch panel 171 and operation keys 172 as physical keys. The printer 13 performs a printing operation for printing an image on a recording medium such as a sheet or a disk. As a recording method of the printer 13, an electrophotographic method, an inkjet method, and so on may be adopted. The scanner 14 performs a scanning operation for reading an image recorded on a document and generating image data. The FAX interface 15 performs a facsimile (FAX) operation for transmitting and receiving image data in a system conforming to the FAX protocol. The MFP 10 may be capable of performing a combined operation in which a plurality of operations are combined. A copying operation in which the printing operation by the printer 13 and the scanning operation by the scanner 14 are combined is an example of the combined operation.

The controller 11 is constituted by a CPU, an ASIC (Application Specific Integrated Circuit), and so on, and controls the operations of the printer 13, the scanner 14, the FAX interface 15, the network interface 16, and the user interface 17. The memory 12 includes a data storage area. The data storage area is an area for storing data used for executing a program and so on. The memory 12 is configured by combining a RAM, a ROM, an SSD, an HDD, and so on. A buffer provided in the controller 11 and used when executing various programs may be regarded as a part of the memory 12. The memory 12 may be a storage medium readable by the controller 11. The storage medium readable by the controller 11 is a non-transitory medium. The non-transitory medium includes, in addition to the above-described examples, a recording medium such as a CD-ROM or a DVD-ROM. A non-transitory medium is also a tangible medium. On the other hand, an electrical signal carrying a program downloaded from a server on the Internet, for example, is a computer-readable signal medium which is a kind of computer-readable medium, but is not included in a non-transitory computer-readable storage medium.

The memory 12 stores a firmware 20 as a program executable by the controller 11. In this embodiment, the controller 11 mainly performs processing according to instructions described in a program. That is, the processing of "judgement", "extraction", "selection", "calculation", "determination", "identification", "acquisition", "reception", "control", and so on in the following description represent the processing of the controller 11. The term "acquisition" is used as a concept that does not require a request. That is, the processing of receiving data without a request from the controller 11 is also included in the concept of "the controller 11 acquires data". The "data" in this specification is represented by a bit string readable by the controller. Data having substantially the same content but different formats are treated as the same data. The same applies to "information" in the present specification.

The firmware 20 also functions as a Web server 21 for displaying a particular Web page on the PC 30. That is, the firmware 20 functions as an Embedded Web Server (EWS). The Web server 21 transmits data for displaying a Web page to the PC 30, thereby providing the Web page to a browser 41 (described later) of the PC 30. As described later, the MFP 10 accepts an operation via the Web page provided to the PC 30. That is, the Web server 21 is an example of a user interface.

The memory 12 stores setting values 25. The MFP 10 performs various operation processes based on the setting values 25. The MFP 10 performs communication using the network interface 16 in accordance with network-related setting values included in the setting values 25, for example. Some of the setting values 25 have a default setting value. The default setting value is a setting value set before the MFP 10 is delivered to the user. The default setting value is set, for example, at the time of manufacturing the MFP 10. The default setting value is set before the MFP 10 is shipped, for example.

Next, the configuration of the PC 30 will be described. The PC 30 includes a network interface 31, a memory 32, a controller 33, a display 34, and a user interface 35. The components 31, 32, 33, and 35 of the PC 30 have configuration similar to the controller 11, the memory 12, the network interface 16, and the user interface 17 of the MFP 10, and a description of those components will be omitted.

The memory 32 stores an OS 40 and the browser 41. The browser 41 displays an image corresponding to Web page data transmitted from the MFP 10 on the display 34 under the control of the controller 33.

Next, a procedure in a case where the user operates the PC 30 to use the Web server 21 of the MFP 10 will be briefly described. The user operates the user interface 35 to input a URL for specifying the Web server 21 to the browser 41. The browser 41 transmits a GET request of HTTPS communication including the input URL. In response to receiving the GET request from the browser 41, the controller 11 returns an HTTPS response corresponding to the GET request.

The returned response includes Web page data for displaying a home screen before authentication. In response to receiving the Web page data, the browser 41 displays a home screen on the display 34 using the Web page data. The home screen includes a password input field for accepting input of a login password.

When the user inputs a login password in the password input field, the browser 41 transmits a POST request including the login password to the controller 11. In response to receiving the POST request including the login password, the controller 11 performs an authentication process using the login password included in the POST request.

When the authentication process is successfully performed, the controller 11 generates a response including Web page data for displaying a home screen after authentication and transmits the response to the PC 30. Since the Web page data transmitted to the PC 30 is processed by the browser 41, transmitting to the PC 30 will be also referred to as transmitting to the browser 41. When the browser 41 receives the response, the browser 41 causes the display 34 to display the home screen after authentication. The home screen after authentication includes an option corresponding to a general setting screen, an option corresponding to an address book screen, an option corresponding to a FAX setting screen, an option corresponding to a copy setting screen, an option corresponding to a print setting screen, an option corresponding to various administrator setting screens, and so on.

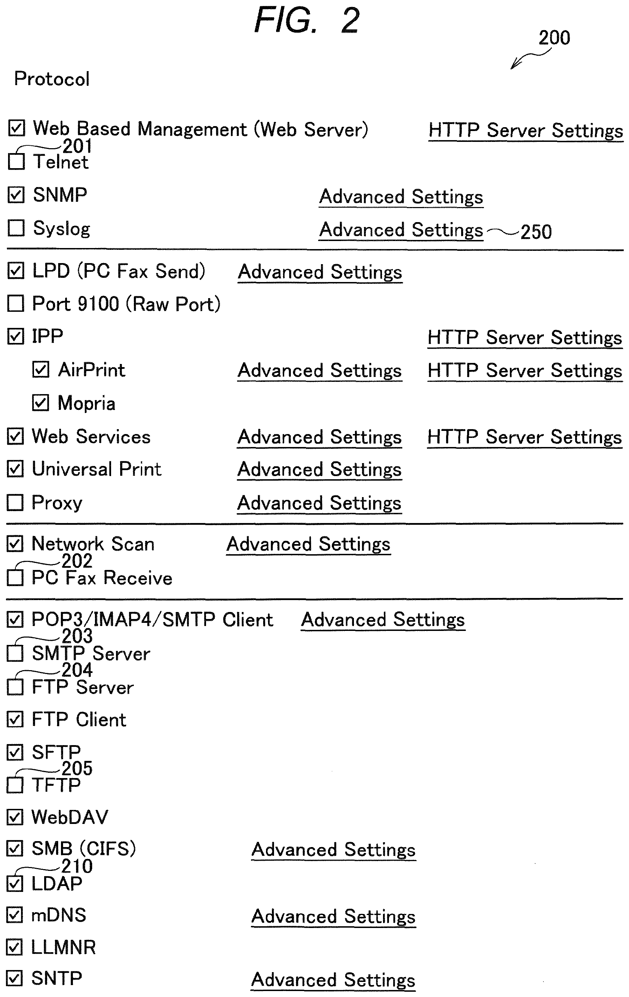

For example, when the option corresponding to the administrator setting screen is operated and the administrator setting screen is displayed on the display 34, and then an option corresponding to a network protocol setting screen included in the administrator setting screen is operated, a network protocol setting screen 200 shown in FIG. 2 is displayed on the display 34.

Check boxes are displayed adjacent to various network protocols displayed on the network protocol setting screen 200. At the time of displaying the network protocol setting screen 200, the network protocol whose check box is indicated by a check mark is set to be enabled, and the network protocol whose check box is blank is set to be disabled. The network protocol setting screen 200 shown in FIG. 2 shows a state where default setting values are set as setting values of various network protocols.

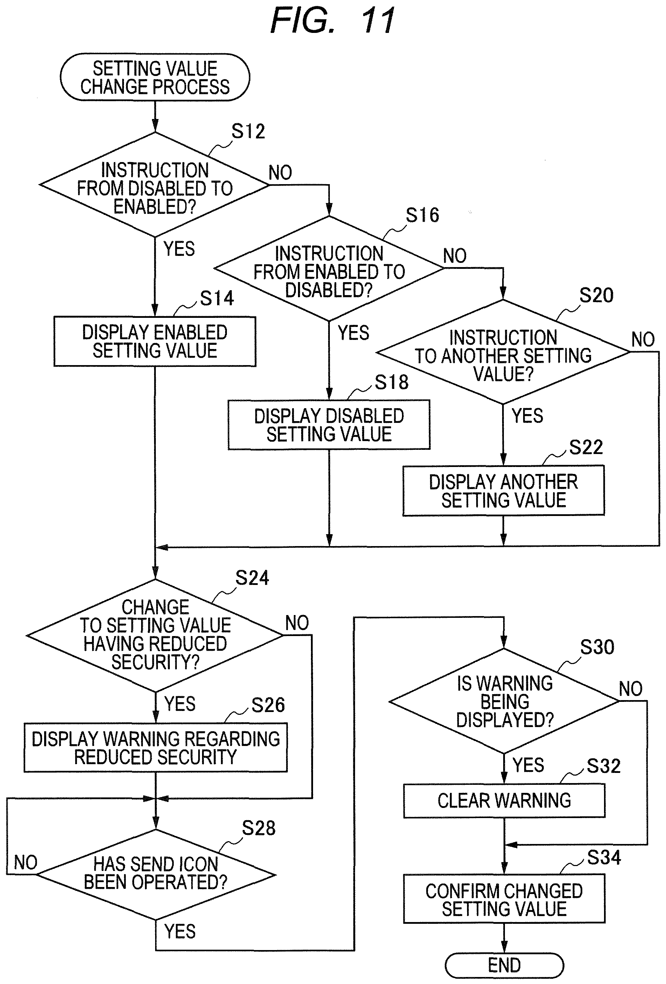

The user freely changes the setting values of various network protocols displayed on the network protocol setting screen 200. FIG. 11 shows a procedure of a setting value change process executed by the MFP 10, particularly the controller 11, when the user performs an operation for changing the setting values of various network protocols displayed on the network protocol setting screen 200.

In FIG. 11, the controller 11 determines whether the user operation on the network protocol setting screen 200 is an operation of changing a setting value indicating an enabled/disabled state from a setting value indicating a disabled state to a setting value indicating an enabled state (S12). This determination may be made by the controller 11, based on position information of the user operation included in the POST request received from the browser 41, by determining whether the user operation on the network protocol setting screen 200 is a change operation from the setting value indicating a disabled state to the setting value indicating an enabled state.

For example, in the network protocol setting screen 200, the default setting value of the network protocol "Telnet" is a setting value indicating a disabled state, but when the adjacent check box 201 is operated, the user operation is a change operation from the setting value indicating a disabled state to the setting value indicating an enabled state. In this case, a YES determination is made in S12, and the controller 11 uses the Web server 21 to generate Web page data for displaying the network protocol setting screen 200 on the browser 41, which indicates that "Telnet" is enabled, for example, by displaying a check mark in the check box 201, and transmits the Web page data to the browser 41 (S14). For convenience, a description indicating a network protocol, such as "Telnet", is also used as a description indicating a setting value of the network protocol. Similarly, a description indicating a security protocol, such as "SSL", is also used as a description indicating a setting value of the security protocol.

Next, the controller 11 determines whether the operation of changing the setting value indicating a disabled state to the setting value indicating an enabled state is an operation of changing the setting value to a setting value having a lower security than the default setting value (S24). For each network protocol that takes a setting value indicating a disabled state and a setting value indicating an enabled state, the memory 12 stores, as table data, for example, (a) whether the default setting value is the setting value indicating a disabled state or the setting value indicating an enabled state and (b) which of the setting value indicating a disabled state or the setting value indicating an enabled state is higher in security. The determination in S24 may be performed based on this table data.

When the operation of changing from the setting value indicating a disabled state to the setting value indicating an enabled state is the operation of changing to the setting value indicating the lower security than the default setting value (S24: YES), the controller 11 displays a warning regarding security degradation in the vicinity of (for example, below) the network protocol to be changed in the network protocol setting screen 200 (S26). More specifically, the controller 11 generates Web page data for causing the browser 41 to display the network protocol setting screen 200 displaying a warning regarding security degradation below the network protocol to be changed, and transmits the Web page data to the browser 41.

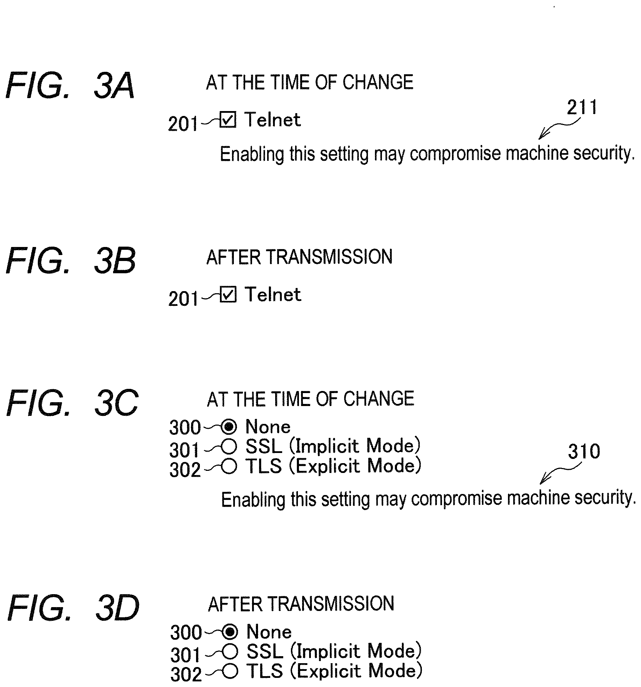

The network protocol "Telnet" is a network protocol for operating a server, a router, and so on in a remote location from a terminal in an IP network. Telnet is an abbreviation for Telecommunications Network. The network protocol "Telnet" does not have high security because all communications, including authentication, are sent in plaintext without encryption. That is, the operation of changing the setting value of the network protocol "Telnet" from the setting value indicating a disabled state to the setting value indicating an enabled state is the operation of changing the setting value to a setting value that lowers the security. Therefore, when the operation of changing the setting value of the network protocol "Telnet" from the setting value indicating a disabled state to the setting value indicating an enabled state is performed, as shown in FIG. 3A, in the network protocol setting screen 200, a check mark is displayed in the check box 201, and a warning display 211 indicating "Enabling this setting may compromise machine security." is displayed below the network protocol "Telnet".

Next, the controller 11 waits until a send icon is operated (S28: NO), and when the send icon is operated (S28: YES), the controller 11 determines whether a warning is being displayed on the network protocol setting screen 200 (S30). The send icon is displayed in the network protocol setting screen 200, although not shown.

Assume that the area corresponding to the network protocol "Telnet" in the network protocol setting screen 200 is in the display state shown in FIG. 3A. The controller 11 makes a YES determination in S30, and the controller 11 generates Web page data for causing the browser 41 to display the network protocol setting screen 200 with the warning cleared, and transmits the Web page data to the browser 41 (S32). Then, the controller 11 performs a confirmation process of the changed setting value, which is a process of confirming (applying) change of the setting value of the network protocol "Telnet" from the setting value indicating a disabled state to the setting value indicating an enabled state (S34), and then ends the network protocol change process. The confirmation process of the changed setting value in S34 may be performed as follows. That is, the browser 41 transmits a POST request including the network protocol setting screen 200 in which a check mark is displayed in the check box to the controller 11. In response to receiving the POST request, the controller 11 changes the setting value of the network protocol associated with the check box having the check mark, which is included in the POST request, from the setting value indicating a disabled state to the setting value indicating an enabled state, and stores the changed setting value as the setting value 25. For example, in the case of the network protocol "Telnet", the setting value of the network protocol "Telnet" is changed from the setting value indicating a disabled state to the setting value indicating an enabled state, and the changed setting value is stored in the memory 12 as the setting value 25. As a result, the setting value of the network protocol "Telnet" is changed and stored in the memory 12.

In the network protocol change process of FIG. 11, the controller 11 of the MFP 10 generates Web page data by each of the processing of S14 and the processing of S26, and transmits the Web page data to the browser 41. Alternatively, the Web page data for displaying the network protocol setting screen 200 on the browser 41 may be configured to cause the controller 33 of the PC 30 to perform a series of the processing of S12 to S32. In this case, for example, the determination in S24 and the processing in S26 may be performed by a script embedded in the Web page data. In this case, the controller 11 does not perform the determination of S24 and the processing of S26. Further, a display mode of the warning display 211, the check box 201 with a check mark, and the characters "Telnet" may be changed from a normal display mode. For example, when the normal display mode is that the characters are black color, the changed display mode may be that the characters are red color.

FIG. 3B shows the display state after the send icon is operated from the display state of FIG. 3A. In the display state of FIG. 3B, a check mark is displayed in the check box 201, and the warning display 211 is cleared. Assuming that the display mode of FIG. 3A is not the normal display mode, it can be said that the display mode of FIG. 3B has returned to the normal display mode. In the display state of FIG. 3A, the setting value of the network protocol "Telnet" is still the default setting value indicating a disabled state in the memory 12. In the display state of FIG. 3B, the setting value of the network protocol "Telnet" has been changed from the setting value indicating a disabled state to the setting value indicating an enabled state in the memory 12.

In this way, when the network protocol setting screen 200 displayed on the browser 41 of the PC 30 receives an instruction to change from the setting value indicating a disabled state to the setting value indicating an enabled state, the warning display 211 is displayed in the network protocol setting screen 200. After the warning display 211 is displayed, in a case where the operation of the send icon is not received on the network protocol setting screen 200, the setting value stored in the memory 12 is not changed. Thus, the user of the MFP 10 recognizes that the instruction to change the setting value may cause security degradation before the setting value stored in the memory 12 is changed.

In the network protocol setting screen 200, network protocols "PC FAX Receive", "SMTP Server", "FTP Client", and "TFTP" are similar to the network protocol "Telnet". That is, for these network protocols, the default setting value is a setting value indicating a disabled state, and changing the setting value from disabled to enabled may cause security degradation. Check boxes 202, 203, 204 and 205 adjacent to the network protocols are blank, and no check marks are displayed, as in the check box 201 adjacent to the network protocol "Telnet". That is, the default setting value is a setting value indicating a disabled state. SMTP is an abbreviation for Simple Mail Transfer Protocol. FTP is an abbreviation for File Transfer Protocol. TFTP is an abbreviation for Trivial File Transfer Protocol.

Another case in the setting value change process of FIG. 11 will be described. In this case, the default setting value is a setting value indicating an enabled state, and when an instruction to change the setting value from the setting value indicating an enabled state to the setting value indicating a disabled state is received, and the change to the setting value indicating a disabled state is confirmed (which causes security degradation), and an instruction to change the setting value from the setting value indicating a disabled state to the setting value indicating an enabled state is again received. In this case, the controller 11 makes a "YES" determination in S12, displays enabled in S14, makes a "NO" determination in S24, waits until the send icon is operated in S28, and when the send icon is operated, makes a "YES" determination in S28, and makes a "NO" determination in S30, and performs the confirmation process of the setting value changed in S34.

In this case, since the processing of S26 is not performed, the warning regarding security degradation is not displayed on the network protocol setting screen 200.

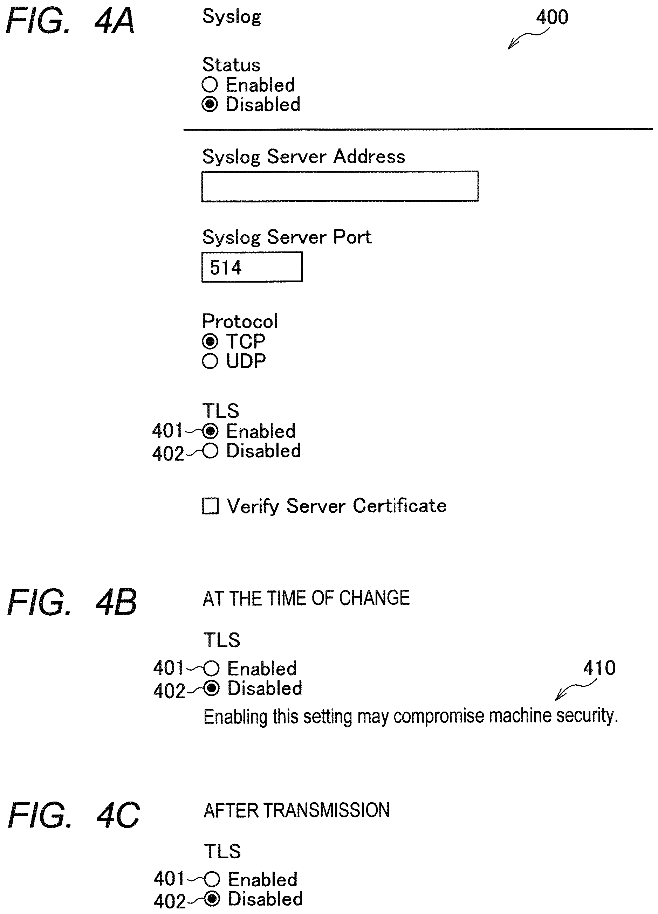

In contrast to the setting value of the network protocol "Telnet", for some network protocols, the default setting value is a setting value indicating an enabled state, and changing the setting value from the setting value indicating an enabled state to the setting value indicating a disabled state may cause security degradation. Examples include security protocols "SSL" and "TLS". The "SSL" and "TLS" are security protocols used in communication in accordance with any one of the network protocols "Syslog", "SMTP", "POP3", "IMAP4", "LDAP", and "FTP". When the controller 11 receives an instruction to change the setting values of these security protocols from the default setting value indicating an enabled state to the setting value indicating a disabled state, in the setting value change process of FIG. 11, the controller 11 makes a "NO" determination in S12, makes a "YES" determination in S16, and displays disabled (S18). For example, as shown in FIG. 4B, the controller 11 displays that a radio button 401 is not selected and a radio button 402 is selected for the security protocol "TLS". SSL is an abbreviation for Secure Sockets Layer. TLS is an abbreviation for Transport Layer Security. Syslog is an abbreviation for System Logging Protocol. POP3 is an abbreviation for Post Office Protocol version 3. IMAP4 is an abbreviation for Internet Message Access Protocol 4. LDAP is the abbreviation for Lightweight Directory Access Protocol.

The setting values of the security protocol include "SSL/TLS". The setting value is a value indicating enablement of the security protocol "SSL", a value indicating enablement of the security protocol "TLS", or a value indicating disablement of both the security protocols. FIG. 3C shows a part of the Web page displayed on the browser 41 when a change instruction is received, the change instruction being for changing from a setting value indicating enablement of "TLS" which is the default setting value of the security protocol "SSL/TLS" to a setting value indicating disablement of both "SSL" and "TLS". Unlike the check box 210 of the network protocol "LDAP", the display example of FIG. 3C includes radio buttons 300, 301 and 302. FIG. 3C shows a case where the radio button 300 adjacent to "None" is selected and an instruction to change to a setting value for disabling both the security protocols "SSL" and "TSL" is received. In this case, a warning display 310 similar to the warning display 211 is displayed. The warning display 310 indicates "Enabling this setting may compromise machine security" in order to indicate that security may be reduced if the setting to disable "SSL" and "TLS" is applied. This warning may be changed to "Disabling SSL and TLS may compromise machine security," for example.

FIG. 3D shows a display state after a send icon is operated in the display state of FIG. 3C. In the display state of FIG. 3D, the radio button 300 is selected and the warning display 310 is cleared. Assuming that the display mode of FIG. 3C is not the normal display mode, it can be said that the display mode of FIG. 3D has returned to the normal display mode. In the display state of FIG. 3C, the setting value of the security protocol "SSL/TLS" is still the default setting value indicating enablement of "TLS", whereas in the display state of FIG. 3D, the setting value of the security protocol "SSL/TLS" has been changed to the setting value indicating disablement of "SSL" and "TLS". In the normal display mode, when the radio button 301 is selected, the warning display 310 is not displayed. That is, although the setting value indicating enablement of "SSL" is not the default setting value, the security is not lowered as compared with the case where "TLS" is enabled, and therefore the warning display 310 is not displayed.

Next, a case where the link 250 to the detailed setting screen of the network protocol "Syslog" is operated in the network protocol setting screen 200 will be described. In this case, the browser 41 displays a detailed setting screen 400 of the network protocol "Syslog" shown in FIG. 4A. As described above, in the detailed setting screen 400, the setting value of the security protocol "TLS" is enabled which is the default setting value. Therefore, when an instruction to change the setting value of the security protocol "TLS" from the setting value indicating an enabled state to the setting value indicating a disabled state is received, the radio button 402 is selected and a warning display 410 similar to the warning display 310 shown in FIG. 3C is displayed as shown in FIG. 4B.

FIG. 4C shows the display state after a send icon is operated from the display state of FIG. 4B. In the display state of FIG. 4C, the radio button 402 is selected and the warning display 410 is cleared. Assuming that the display mode of FIG. 4B is not the normal display mode, it can be said that the display mode of FIG. 4C has returned to the normal display mode. In the display state of FIG. 4B, the setting value of the security protocol "TLS" is still the default setting value indicating an enabled state, whereas in the display state of FIG. 4C, the setting value of the security protocol "TLS" has been changed from the setting value indicating an enabled state to the setting value indicating a disabled state and the setting change is confirmed.

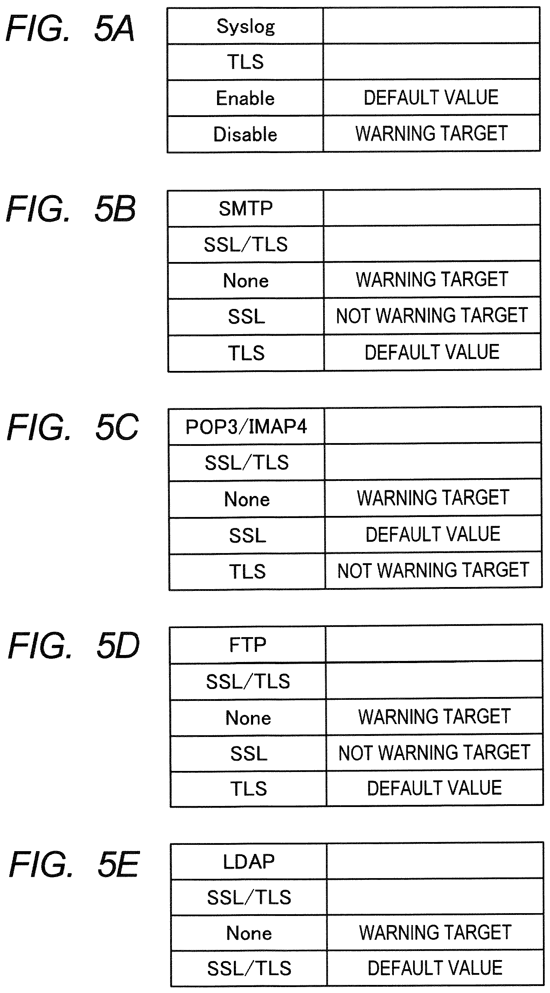

FIGS. 5A to 5E show, regarding various network protocols, which setting value corresponds to a default setting value and which setting value corresponds to a warning target (in this embodiment, a warning display target) based on a reason that security degradation may be caused when an instruction to change the default setting value to another setting value is received.

As shown in FIG. 5A, in the MFP 10, the setting value of the security protocol "TLS" used in communication in accordance with the network protocol "Syslog" is changeable. In the security protocol "TLS", a setting value indicating an enabled state is a default setting value, and a setting value indicating a disabled state is a setting value of the warning target (that is, a warning is displayed).

As shown in FIG. 5B, in the network protocol "SMTP", the setting value of the security protocol "SSL/TLS" is changeable. The setting value for enabling the security protocol "TLS" is the default setting value. The setting value for enabling the security protocol "SSL" is not the warning target. The setting value for disabling both the security protocols "TLS" and "SSL" is the warning target.

As shown in FIG. 5C, in the network protocol "POP3" or the network protocol "IMAP4", the setting values of the security protocol "SSL" and the security protocol "TLS" may be changed. The setting value for enabling the security protocol "SSL" is a default setting value, the setting value for enabling the security protocol "TLS" is not a warning target, and the setting value for disabling both the security protocol "TLS" and the security protocol "SSL" is a warning target.

As shown in FIG. 5D, in the network protocol "FTP", the setting values of the security protocol "SSL" and the security protocol "TLS" may be changed. The setting value for enabling the security protocol "TLS" is a default setting value, the setting value for enabling the security protocol "SSL" is not a warning target, and the setting value for disabling both the security protocol "TLS" and the security protocol "SSL" is a warning target.

As shown in FIG. 5E, in the network protocol "LDAP", the setting value of the security protocol "SSL/TLS" may be changed. The setting value for enabling the use of the security protocols "SSL" and "TLS" is a default setting value, and the setting value for disabling the use of both the security protocols "SSL" and "TLS" is a warning target. In communication using a network protocol, when use of a security protocol is required and the use of the security protocol is set to enabled, the MFP 10 uses the required security protocol.

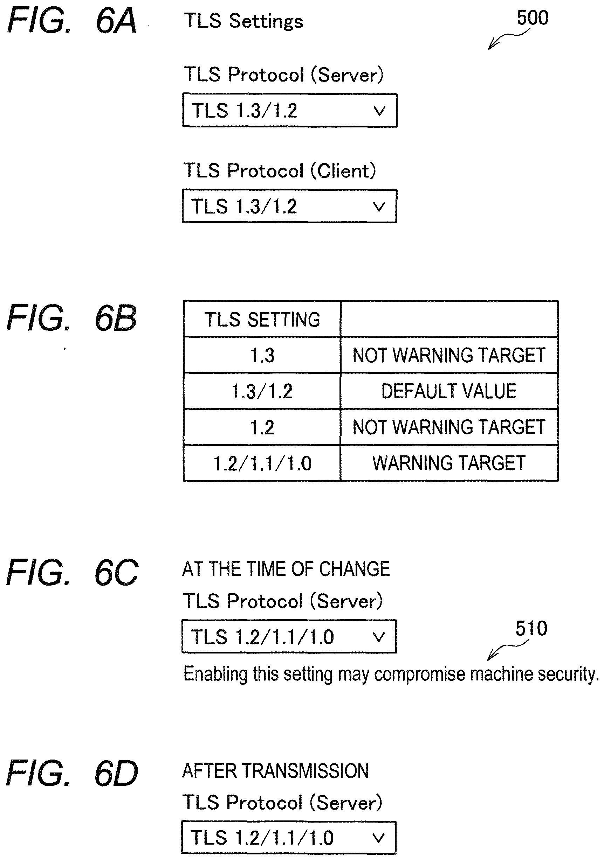

FIG. 6A shows an example of a setting value setting screen 500 indicating an encryption method used for data encryption in the security protocol "TLS". The setting values displayed on the setting screen 500 are default setting values.

FIG. 6B shows the correspondence between the setting values indicating the selectable encryption methods and the setting values indicating which setting value is a default setting value and which setting value is a warning target. As shown in FIG. 6B, TLS1.3/1.2 is a default setting value, TLS1.3 and TLS1.2 are setting values of non-warning target, and TLS1.2/1.1/1.0 is a setting value of a warning target.

When the controller 11 receives an instruction to change the default setting value from TLS1.3/1.2 to TLS1.2/1.1/1.0, in the setting value change process of FIG. 11, the controller 11 makes a "NO" determination in S12, makes a "NO" determination in S16, makes a "YES" determination in S20, and displays another setting value related to the change instruction (S22). As a result, as shown in FIG. 6C, the setting value indicating the encryption method is changed from TLS1.3/1.2 to TLS1.2/1.1/1.0 and displayed.

Then, the controller 11 makes a "YES" determination in S24, and displays a warning display 510 about security degradation below the display of TLS1.2/1.1/1.0 in S26. Further, the controller 11 waits until a send icon is operated (S28: NO), and when the send icon is operated (S28: YES), the controller 11 makes a "YES" determination in S30, erases the warning (S32), and performs a confirmation process of the changed setting value (S34).

FIG. 6C shows a part of the Web page displayed on the browser 41 when the instruction to change the default setting value of the network protocol "TLS" from TLS 1.311.2 to TLS1.2/1.1/1.0 has been received.

FIG. 6D shows the display state after the send icon is operated from the display state of FIG. 6C. In the display state of FIG. 6D, although TLS1.2/1.1/1.0 is selected, the warning display 510 is cleared. Assuming that the display mode of FIG. 6C is not the normal display mode, the display mode of FIG. 6D has returned to the normal display mode. In the display state of FIG. 6C, the setting value of the security protocol "TLS" is still the default setting value of TLS1.3/1.2, whereas in the display state of FIG. 6D, the setting value of the security protocol "TLS" has been changed from the setting value indicating TLS1.3/1.2 to the setting value indicating TLS1.2/1.1/1.0 and the setting change is confirmed.

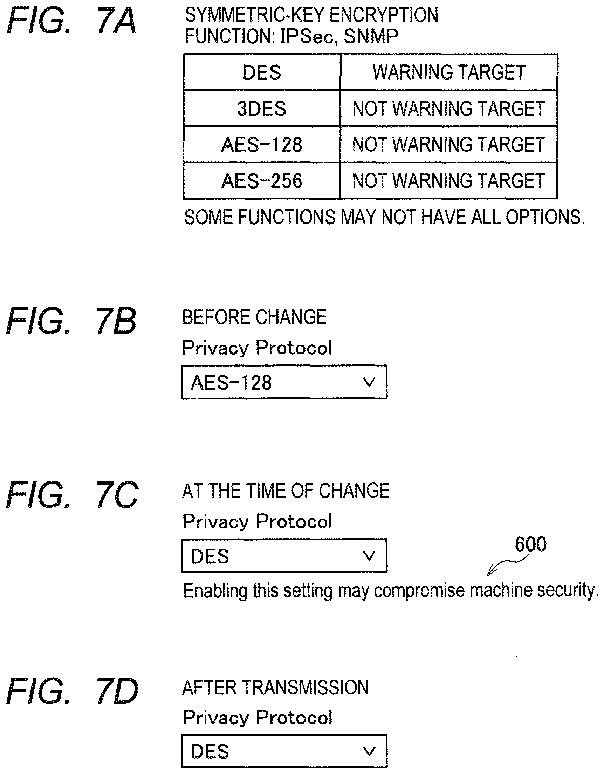

FIG. 7A shows a correspondence between types of data encryption algorithms listed as options and whether each option is a warning target, in a case where symmetric-key encryption is used as an encryption method for encrypting data handled in communication in accordance with a network protocol "IPSec" (Internet Protocol Security) or a network protocol "SNMP" (Simple Network Management Protocol). As shown in FIG. 7A, the setting value indicating the use of a data encryption algorithm that performs DES (Data Encryption Standard) once per encryption is a warning target, whereas the setting values indicating the use of 3DES, AES-128, and AES-256 are not warning targets. Here, AES is an abbreviation for Advanced Encryption Standard.

Therefore, in a case where the setting value before change is a setting value indicating AES-128 as shown in FIG. 7B and an instruction is given to change to a setting value indicating DES as shown in FIG. 7C, a warning display 600 is displayed. When a send icon is operated, the warning display 600 is cleared and the change to the setting value indicating DES is confirmed as shown in FIG. 7D.

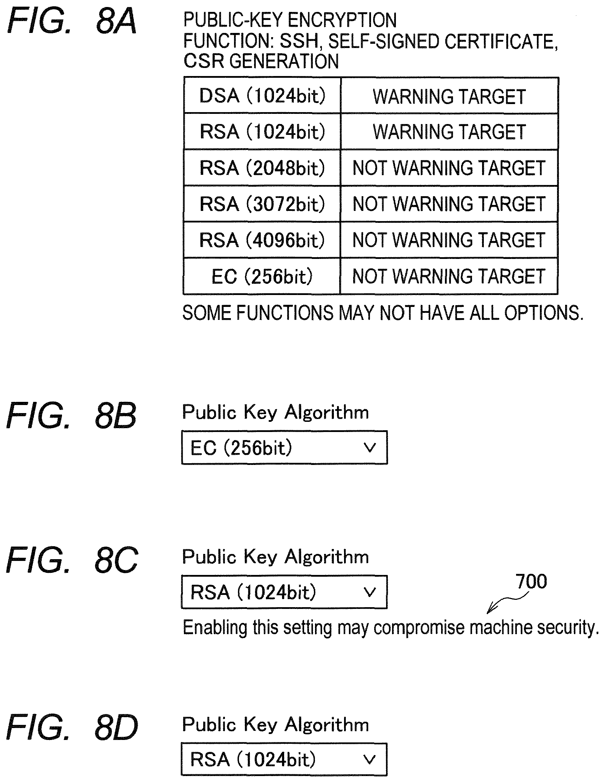

FIG. 8A is a table showing a correspondence between types of data encryption algorithms listed as options and whether each data encryption algorithm is a warning target in a case where public-key encryption is used as an encryption method used for encrypting data handled in communication in accordance with a network protocol "SSH" (Secure Shell), an encryption method used for encrypting a self-signed certificate, and an encryption method used for encrypting a certificate signing request (CSR). As shown in FIG. 8A, a setting value indicating the use of an encryption method DSA (1024 bits) and a setting value indicating the use of an encryption method RSA (1024 bits) are set as warning targets. Setting values indicating that encryption methods RSA (2048 bits), RSA (3072 bits), RSA (4096 bits), and EC (256 bits) are used are set as non-warning targets. Here, DSA is an abbreviation for Digital Signature Algorithm, and RSA is an abbreviation for Rivest-Shamir-Adleman.

Therefore, in a case where the setting value before change is a setting value indicating EC (256 bits) as shown in FIG. 8B and an instruction is given to change to a setting value indicating RSA (1024 bits) as shown in FIG. 8C, a warning display 700 is displayed. When a send icon is operated, the warning display 700 is cleared and the change to the setting value indicating RSA (1024 bits) is confirmed as shown in FIG. 8D.

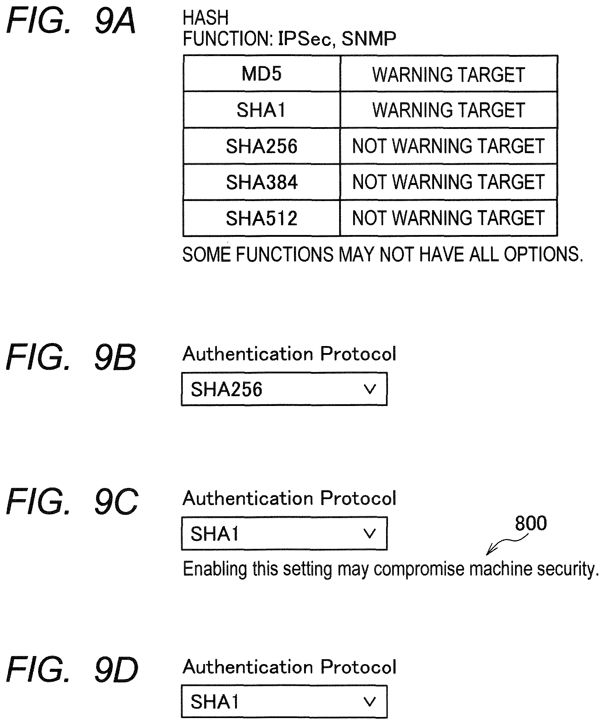

FIG. 9A shows a correspondence between types of hash function used for hashing data handled in communication in accordance with a network protocol "IPSec" or a network protocol "SNMP" and whether each hash function is a warning target. As shown in FIG. 9A, a setting value indicating the use of MD5 (Message Digest Algorithm 5) and a setting value indicating the use of SHA1 are set as warning targets, and setting values indicating the use of SHA256, SHA384, and SHA512 are set as non-warning targets. Here, SHA is an abbreviation for Secure Hash Algorithm.

Therefore, when the setting value before change is a setting value indicating SHA256 as shown in FIG. 9B and an instruction is given to change to a setting value indicating SHA1 as shown in FIG. 9C, a warning display 800 is displayed. When a send icon is operated, the warning display 800 is cleared and the change to the setting value indicating SHA1 is confirmed as shown in FIG. 9D.

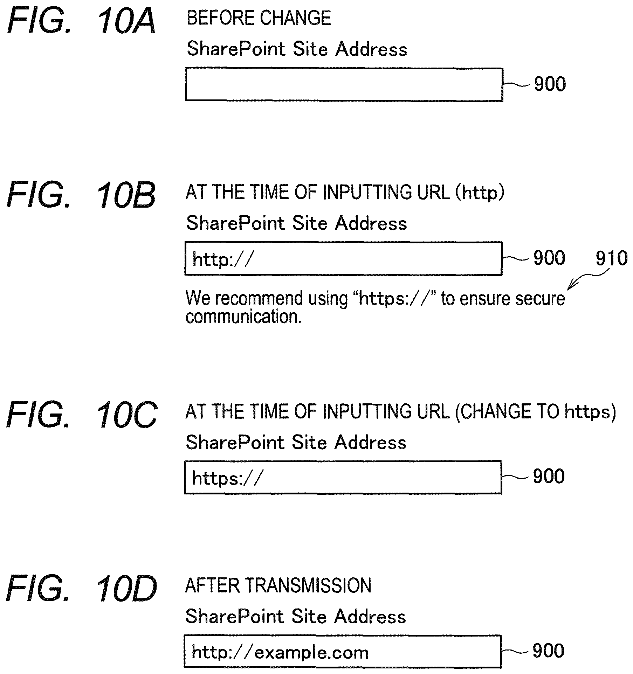

FIGS. 10A to 10D show a situation in which a Uniform Resource Locator (URL) is input to a URL input field 900. The URL input field 900 is included in a Web page displayed on the browser 41.

FIG. 10A shows a state before a URL is input to the URL input field 900. FIG. 10B shows a state where "http://" is input to the URL input field 900. In response to this, a warning display 910 "We recommend using "https://" to ensure secure communication." is displayed below the URL input field 900. When "https://" is input to the URL input field 900 in accordance with the warning display 910, the warning display 910 is cleared as shown in FIG. 10C. On the other hand, when a send icon is operated after "http://" is input in the URL input field 900, the warning display 910 is cleared and the input URL "http://example.com" is confirmed as shown in FIG. 10D.

While the disclosure has been described in conjunction with various example structures outlined above and illustrated in the figures, various alternatives, modifications, variations, improvements, and/or substantial equivalents, whether known or that may be presently unforeseen, may become apparent to those having at least ordinary skill in the art. Accordingly, the example embodiments of the disclosure, as set forth above, are intended to be illustrative of the disclosure, and not limiting the disclosure. Various changes may be made without departing from the spirit and scope of the disclosure. Thus, the disclosure is intended to embrace all known or later developed alternatives, modifications, variations, improvements, and/or substantial equivalents. Some specific examples of potential alternatives, modifications, or variations in the described disclosure are provided below.
(1) In the above embodiment, the MFP 10 is described as an example of an image forming apparatus, but the image forming apparatus may be a printer, a scanner, or a copier.
(2) In the above embodiment, the instruction to change the setting value 25 and the warning regarding security degradation are issued through the Web page displayed on the browser 41 of the PC 30 via the Web server 21, but the present disclosure is not limited to this. The instruction to change the setting value 25 and the warning regarding security degradation may be issued directly via the user interface 17 of the MFP 10.

According to another aspect, an image forming apparatus includes a memory, a user interface, a network interface, and a controller. The image forming apparatus is connectable to the Internet via the network interface. The controller is configured to perform communication via the network interface in accordance with a setting value stored in the memory. The setting value that can be stored in the memory includes a setting value for which a default setting value is set. The controller is configured to, in response to receiving, via the user interface, an instruction to change a setting value stored in the memory, change the setting value in accordance with the instruction. The controller is configured to, in a case where the received instruction is an instruction to change to a setting value having a lower security than the default setting value, control the user interface to display a warning regarding security degradation.

According to another aspect, the controller is configured to: in a case where the default setting value is a setting value indicating a disabled state and in response to receiving, via the user interface, an instruction to change a setting value of a network protocol from a setting value indicating a disabled state to a setting value indicating an enabled state, control the user interface to display a warning regarding security degradation.

According to another aspect, the controller is configured to: in a case where the default setting value is a setting value indicating an enabled state and in response to receiving, via the user interface, an instruction to change the setting value of the network protocol from a setting value indicating a disabled state to a setting value indicating an enabled state, control the user interface not to display a warning regarding security degradation.

According to another aspect, the default setting value is a setting value indicating a disabled state; and the setting value of the network protocol is a setting value indicating an enabled state or a disabled state of Telnet, a setting value indicating an enabled state or a disabled state of PC Fax reception protocol, a setting value indicating an enabled state or a disabled state of SMTP, a setting value indicating an enabled state or a disabled state of FTP, or a setting value indicating an enabled state or a disabled state of TFTP.

According to another aspect, the user interface includes an embedded Web server configured to transmit screen data to an external apparatus having accessed the embedded Web server, the screen data indicating a setting screen regarding a setting value indicating an enabled state or a disabled state of the network protocol, the setting screen displayed at the external apparatus being configured to, in response to receiving an instruction to change from a setting value indicating a disabled state to a setting value indicating an enabled state, display a warning regarding security degradation on the setting screen. The controller is configured to: after displaying the warning regarding security degradation on the setting screen, in response to not receiving an operation to confirm change of the setting value via the setting screen, keep the setting value stored in the memory; and in response to receiving an operation to confirm change of the setting value via the setting screen, change the setting value stored in the memory.

According to another aspect, the controller is configured to: in a case where the default setting value is a setting value indicating an enabled state and in response to receiving, via the user interface, an instruction to change a setting value of a security protocol used in communication in accordance with a network protocol from a setting value indicating an enabled state to a setting value indicating a disabled state, control the user interface to display a warning regarding security degradation.

According to another aspect, the default setting value is a setting value indicating an enabled state. The setting value of the security protocol used in communication in accordance with the network protocol is a setting value indicating an enabled state or a disabled state of TLS used in communication in accordance with the network protocol or a setting value indicating an enabled state or a disabled state of SSL used in communication in accordance with the network protocol.

According to another aspect, the default setting value is a setting value indicating an enabled state. The setting value of the security protocol used in communication in accordance with the network protocol is a setting value indicating an enabled state or a disabled state of a security protocol used in communication in accordance with Syslog, a setting value indicating an enabled state or a disabled state of a security protocol used in communication in accordance with SMTP, a setting value indicating an enabled state or a disabled state of a security protocol used in communication in accordance with POP3, a setting value indicating an enabled state or a disabled state of a security protocol used in communication in accordance with IMAP4, a setting value indicating an enabled state or a disabled state of a security protocol used in communication in accordance with FTP, or a setting value indicating an enabled state or a disabled state of a security protocol used in communication in accordance with LDAP.

According to another aspect, the user interface includes an embedded Web server configured to transmit screen data to an external apparatus having accessed the embedded Web server, the screen data indicating a setting screen regarding a setting value indicating an enabled state or a disabled state of the network protocol, the setting screen displayed at the external apparatus being configured to, in response to receiving an operation to display a detailed setting screen regarding the security protocol used in communication in accordance with the network protocol, display the detailed setting screen at the external apparatus, the detailed setting screen displayed at the external apparatus being configured to, in response to receiving an instruction to change from a setting value indicating an enabled state to a setting value indicating a disabled state regarding the security protocol used in communication in accordance with the network protocol, display a warning regarding security degradation on the detailed setting screen. The controller is configured to: after displaying the warning regarding security degradation on the detailed setting screen, in response to not receiving an operation to confirm change of the setting value via the detailed setting screen, keep the setting value stored in the memory; and in response to receiving an operation to confirm change of the setting value via the detailed setting screen, change the setting value stored in the memory.

According to another aspect, the controller is configured to: in response to receiving, via the user interface, an instruction to change a setting value of an encryption method to a setting value indicating use of an encryption method having a lower strength than a strength of an encryption method indicated by the default setting value, the encryption method being used in encryption of data handled in communication in accordance with a network protocol, control the user interface to display a warning regarding security degradation.

According to another aspect, the setting value indicating use of the encryption method having the lower strength than the strength of the encryption method indicated by the default setting value is a setting value indicating use of TLS1.1 or a setting value indicating use of TLS1.0.

According to another aspect, the user interface includes an embedded Web server configured to transmit screen data to an external apparatus having accessed the embedded Web server, the screen data indicating a setting screen regarding a setting value indicating an encryption method used in encryption of data handled in communication in accordance with a network protocol; the setting screen displayed at the external apparatus being configured to, in response to receiving an instruction to change to a setting value indicating use of an encryption method having a lower strength than a strength of an encryption method indicated by the default setting value, display a warning regarding security degradation on the setting screen. The controller is configured to: after displaying the warning regarding security degradation on the setting screen, in response to not receiving an operation to confirm change of the setting value via the setting screen, keep the setting value stored in the memory; and in response to receiving an operation to confirm change of the setting value via the setting screen, change the setting value stored in the memory.

According to another aspect, the setting value indicating the encryption method used in encryption of data handled in communication in accordance with the network protocol is a setting value indicating a type of a symmetric-key encryption method to be used. The setting value indicating use of the encryption method having the lower strength than the strength of the encryption method indicated by the default setting value is a setting value indicating use of a method of performing DES once per single encryption.

According to another aspect, the setting value indicating the encryption method used in encryption of data handled in communication in accordance with the network protocol is a setting value indicating an encryption method used in encryption of data handled in communication in accordance with IPSec, or a setting value indicating an encryption method used in encryption of data handled in communication in accordance with SNMP.

According to another aspect, the setting value indicating the encryption method used in encryption of data handled in communication in accordance with the network protocol is a setting value indicating a type of a public-key encryption method to be used. The setting value indicating use of the encryption method having the lower strength than the strength of the encryption method indicated by the default setting value is a setting value indicating use of DSA (1024bit) or a setting value indicating use of RSA (1024bit).

According to another aspect, the setting value indicating the encryption method used in encryption of data handled in communication in accordance with the network protocol is a setting value indicating an encryption method used in encryption of data handled in communication in accordance with SSH, a setting value indicating an encryption method used in encryption of a self-signed certificate, or a setting value indicating an encryption method used in encryption of a certificate signing request.

According to another aspect, the controller is configured to: in response to receiving, via the user interface, an instruction to change to a setting value indicating use of a hash function having a lower strength than a strength of a hash function indicated by the default setting value, the hash function being used for hashing data handled in communication in accordance with a network protocol, control the user interface to display a warning regarding security degradation.

According to another aspect, the setting value indicating use of the hash function with the lower strength than the strength of the hash function indicated by the default setting value is a setting value indicating use of MD5 or a setting value indicating use of SHA1.

According to another aspect, the setting value indicating the hash function used for hashing data handled in communication in accordance with the network protocol is a setting value indicating a hash function used for hashing data handled in communication in accordance with IPSec or a setting value indicating a hash function used for hashing data handled in communication in accordance with SNMP.

According to another aspect, the user interface includes an embedded Web server configured to transmit screen data to an external apparatus having accessed the embedded Web server, the screen data indicating a setting screen for a setting value indicating a hash function used for hashing data handled in communication in accordance with the network protocol, the setting screen displayed at the external apparatus being configured to, in response to receiving an instruction to change to a setting value indicating use of a hash function having a lower strength than a strength of a hash function indicated by the default setting value, display a warning regarding security degradation on the setting screen. The controller is configured to: after displaying the warning regarding security degradation on the setting screen, in response to not receiving an operation to confirm change of the setting value via the setting screen, keep the setting value stored in the memory; and in response to receiving an operation to confirm change of the setting value via the setting screen, change the setting value stored in the memory.

According to another aspect, an image forming apparatus includes a memory, a user interface, a network interface, and a controller. The image forming apparatus is connectable to the Internet via the network interface. The controller is configured to perform communication via the network interface in accordance with a setting value stored in the memory. The controller is configured to, in response to receiving, via the user interface, an instruction to change the setting value stored in the memory, change the setting value in accordance with the instruction. The controller is configured to, in response to receiving, via the user interface, an instruction to change a setting value in URL format to a URL indicating use of HTTP without using SSL, the setting value in URL format indicating a communication destination of communication in accordance with a network protocol, control the user interface to display a warning regarding security degradation.

According to another aspect, the user interface includes an embedded Web server configured to transmit screen data to an external apparatus having accessed the embedded Web server, the screen data indicating a setting screen for a setting value in URL format, the setting value in URL format indicating the communication destination of communication in accordance with the network protocol, the setting screen displayed at the external apparatus being configured to, in response to receiving an instruction to change to URL indicating use of HTTP without using SSL, display a warning regarding security degradation on the setting screen. The controller is configured to: after displaying the warning regarding security degradation on the setting screen, in response to not receiving an operation to confirm change of the setting value via the setting screen, keep the setting value in URL format stored in the memory; and in response to receiving an operation to confirm change of the setting value via the setting screen, change the setting value in URL format stored in the memory.

## Claims

1. An image forming apparatus comprising:
a memory;
a user interface;
a network interface; and
a controller,
the image forming apparatus being connectable to the Internet via the network interface,
the controller configured to:
perform communication via the network interface in accordance with a setting value stored in the memory;
in response to receiving, via the user interface, an instruction to change the setting value stored in the memory, change the setting value in accordance with the instruction;
perform communication via the network interface in accordance with the changed setting value stored in the memory; and
control the user interface to display a warning regarding security degradation based on the received instruction.

2. The image forming apparatus according to claim 1, wherein the setting value stored in the memory has a default setting value; and
wherein the controller is configured to:
in a case where the received instruction is an instruction to change to a setting value having a lower security than the default setting value, control the user interface to display the warning regarding security degradation.

3. The image forming apparatus according to claim 2, wherein the controller is configured to:
in a case where the default setting value is a setting value indicating a disabled state and in response to receiving, via the user interface, an instruction to change a setting value of a network protocol from a setting value indicating a disabled state to a setting value indicating an enabled state, control the user interface to display the warning regarding security degradation.

4. The image forming apparatus according to claim 3, wherein the default setting value is a setting value indicating a disabled state; and
wherein the setting value of the network protocol is a setting value indicating an enabled state or a disabled state of Telnet, a setting value indicating an enabled state or a disabled state of PC Fax reception protocol, a setting value indicating an enabled state or a disabled state of SMTP, a setting value indicating an enabled state or a disabled state of FTP, or a setting value indicating an enabled state or a disabled state of TFTP.

5. The image forming apparatus according to claim 2, wherein the controller is configured to:
in a case where the default setting value is a setting value indicating an enabled state and in response to receiving, via the user interface, an instruction to change a setting value of a security protocol used in communication in accordance with a network protocol from a setting value indicating an enabled state to a setting value indicating a disabled state, control the user interface to display the warning regarding security degradation.

6. The image forming apparatus according to claim 5, wherein the default setting value is a setting value indicating an enabled state; and
wherein the setting value of the security protocol used in communication in accordance with the network protocol is a setting value indicating an enabled state or a disabled state of TLS used in communication in accordance with the network protocol or a setting value indicating an enabled state or a disabled state of SSL used in communication in accordance with the network protocol.

7. The image forming apparatus according to claim 2, wherein the controller is configured to:
in response to receiving, via the user interface, an instruction to change a setting value of an encryption method to a setting value indicating use of an encryption method having a lower strength than a strength of an encryption method indicated by the default setting value, the encryption method being used in encryption of data handled in communication in accordance with a network protocol, control the user interface to display the warning regarding security degradation.

8. The image forming apparatus according to claim 7, wherein the setting value indicating use of the encryption method having the lower strength than the strength of the encryption method indicated by the default setting value is a setting value indicating use of TLS 1.1 or a setting value indicating use of TLS1.0.

9. The image forming apparatus according to claim 7, wherein the setting value indicating the encryption method used in encryption of data handled in communication in accordance with the network protocol is a setting value indicating a type of a symmetric-key encryption method to be used; and
wherein the setting value indicating use of the encryption method having the lower strength than the strength of the encryption method indicated by the default setting value is a setting value indicating use of a method of performing DES once per single encryption.

10. The image forming apparatus according to claim 7, wherein the setting value indicating the encryption method used in encryption of data handled in communication in accordance with the network protocol is a setting value indicating a type of a public-key encryption method to be used; and
wherein the setting value indicating use of the encryption method having the lower strength than the strength of the encryption method indicated by the default setting value is a setting value indicating use of DSA (1024bit) or a setting value indicating use of RSA (1024bit).

11. The image forming apparatus according to claim 10, wherein the setting value indicating the encryption method used in encryption of data handled in communication in accordance with the network protocol is a setting value indicating an encryption method used in encryption of data handled in communication in accordance with SSH, a setting value indicating an encryption method used in encryption of a self-signed certificate, or a setting value indicating an encryption method used in encryption of a certificate signing request.

12. The image forming apparatus according to claim 2, wherein the controller is configured to:
in response to receiving, via the user interface, an instruction to change to a setting value indicating use of a hash function having a lower strength than a strength of a hash function indicated by the default setting value, the hash function being used for hashing data handled in communication in accordance with a network protocol, control the user interface to display the warning regarding security degradation.

13. The image forming apparatus according to claim 12, wherein the setting value indicating use of the hash function with the lower strength than the strength of the hash function indicated by the default setting value is a setting value indicating use of MD5 or a setting value indicating use of SHA1.

14. The image forming apparatus according to claim 13, wherein the setting value indicating the hash function used for hashing data handled in communication in accordance with the network protocol is a setting value indicating a hash function used for hashing data handled in communication in accordance with IPSec or a setting value indicating a hash function used for hashing data handled in communication in accordance with SNMP.

15. The image forming apparatus according to claim 1, wherein the controller is configured to:
in response to receiving, via the user interface, an instruction to change a setting value in URL format to a URL indicating use of HTTP without using SSL, the setting value in URL format indicating a communication destination of communication in accordance with a network protocol, control the user interface to display the warning regarding security degradation.
